(19) Europäisches Patentamt
European Patent Office
Office européen des brevets

(11) EP 0 755 715 A1

(12) **EUROPÄISCHE PATENTANMELDUNG**

(43) Veröffentlichungstag:
29.01.1997 Patentblatt 1997/05

(51) Int. Cl.$^6$: **B01J 19/10**, B01J 19/26,
B01J 19/24, B01J 8/22

(21) Anmeldenummer: 96107549.6

(22) Anmeldetag: 11.05.1996

(84) Benannte Vertragsstaaten:
AT BE CH DE ES FR GB IE IT LI NL SE

(30) Priorität: 11.07.1995 DE 19524712

(71) Anmelder: METALLGESELLSCHAFT AG
60323 Frankfurt am Main (DE)

(72) Erfinder:
• Hoffmann, Ulrich, Prof. Dr.
37154 Northeim (DE)
• Kunz, Ulrich, Dr.
38678 Clausthal-Zellerfeld (DE)
• Horst, Christian
38678 Clausthal-Zellerfeld (DE)

(54) **Vorrichtung zur Durchführung chemischer Reaktionen und ihre Verwendung**

(57) Es wird eine Vorrichtung zur Durchführung chemischer Reaktionen zwischen flüssigen oder gasförmigen und festen Reaktionspartnern unter Einwirkung von Ultraschall beschrieben. Die Vorrichtung besteht aus einem trichterförmigen Reaktionsraum (3) und einem nachgeschalteten Behälter (13), wobei der Reaktionsraum (3) die Form eines Kegelstumpfes hat, an dessen kleiner Grundfläche (4) die Ultraschallquelle (5,6) angeordnet ist und wobei in der Nähe der Ultraschallquelle (5,6) mindestens eine Düse (2a, 2b) angeordnet ist, über die die flüssigen und gasförmigen Reaktionspartner dem Reaktionsraum (3) zugeführt werden. Ferner wird vorgeschlagen, diese Vorrichtung zur Durchführung metallorganischer Reaktionen, insbesondere der Grignard-Reaktion, zu verwenden.

## Beschreibung

Die Erfindung betrifft eine Vorrichtung zur Durchführung chemischer Reaktionen zwischen flüssigen oder gasförmigen und festen Reaktionspartnern unter Einwirkung von Ultraschall. Die Erfindung betrifft ferner die Verwendung dieser Vorrichtung.

Es ist bekannt, daß Ultraschall eine Reihe von mechanischen, chemischen und biologischen Wirkungen auslöst. So lassen sich mit Ultraschall-Impulsen angeschmutzte Textilien oder verschmutzte Metallgegenstände reinigen. Ferner ermöglichen Ultraschall-Schwingungen infolge der durch sie auf kleinstem Raum erzeugten hohen Druckunterschiede feinste Misch- und Malvorgänge, die Herstellung extrem feiner Dispersionen, die Entgasung von Flüssigkeiten und Schmelzen, die Koagulation von Aerosolen, die Herstellung von Legierungen aus sonst nicht legierbaren Metallen, die Dispergierung nicht mischbarer Flüssigkeiten und die Vernebelung von Flüssigkeiten zur Aerosolherstellung. Schließlich zerstört Ultraschall Oxidschichten auf Aluminium, Eisen und Kupfer. Inzwischen befaßt sich ein Teilgebiet der Chemie, die Sonochemie, mit den Wirkungen des Ultraschalls auf chemische Reaktionen. Dabei hat sich gezeigt, daß die Haupteffekte der vorzugsweise in flüssiger Phase durchgeführten sonochemischen Reaktionen auf Kavitationen beruhen, wobei durchaus hohe Temperaturen und Drücke im Mikrobereich auftreten. So werden beispielsweise organische Moleküle durch die Einwirkung von Ultraschall gespalten, Polymere werden depolymerisiert und Monomere werden polymerisiert (Acrylnitril). Auch die Durchführung der Grignard-Reaktion unter Einwirkung von Ultraschall wurde bereits vorgeschlagen, wobei durch den Ultraschall insbesondere die Reaktionsgeschwindigkeit erhöht und die Induktionszeit -also das Anspringen der Reaktion- verkürzt wird.

Als Ultraschall wird der Schall bezeichnet, dessen Frequenz oberhalb des menschlichen Höhrbereichs, also oberhalb ca. 20 kHz, liegt. Zur Erzeugung von Ultraschall werden mechanische oder elektrische Schwingungserzeuger (Schallwandler) verwendet. Insbesondere kommen piezoelektrische Schwingungserzeuger zum Einsatz, die aus Quarz oder keramischem Material bestehen. Ultraschall übertrifft den gewöhnlichen Schall an mechanischer Kraftwirkung und Energie bei weitem. Zu dem läßt sich Ultraschall gut fokussieren. Allerdings spielt das Transportmedium für den Ultraschall eine große Rolle. Da die Absorption des Schalls in der Regel mit der Frequenz ansteigt, wird der Ultraschall auf seinem Weg durch ein Medium schneller abgeschwächt als gewöhnlicher Schall. Da Gase den Ultraschall stark schwächen, werden Vorgänge, die unter Einwirkung von Ultraschall ablaufen, vorzugsweise in flüssigen Medien durchgeführt. Die Absorption des Ultraschalls bewirkt eine lokale Erwärmung des Mediums.

Bei der Durchführung chemischer Reaktionen im technischen Maßstab hat sich die Anwendung von Ultraschall bisher noch nicht durchsetzen können, da einerseits nur eine kleine Zahl von Anwendungsmöglichkeiten untersucht wurde und da andererseits die Entwicklung geeigneter Reaktoren erst begonnen hat. Der Erfindung liegt daher die Aufgabe zugrunde, eine Vorrichtung zur Durchführung chemischer Reaktionen zwischen flüssigen oder gasförmigen und festen Reaktionspartnern unter Einwirkung von Ultraschall zu schaffen, die auch im technischen Maßstab anwendbar ist, eine hohe Betriebssicherheit gewährleistet und insbesondere die Reaktionsgeschwindigkeit signifikant erhöht.

Die der Erfindung zugrunde liegende Aufgabe wird durch die Schaffung einer Vorrichtung gelöst, die aus einem trichterförmigen Reaktionsraum und einem nachgeschalteten Behälter besteht, wobei der Reaktionsraum die Form eines Kegelstumpfes hat, an dessen kleiner Grundfläche die Ultraschallquelle angeordnet ist, und wobei in der Nähe der Ultraschallquelle mindestens eine Düse angeordnet ist, über die die flüssigen und gasförmigen Reaktionspartner dem Reaktionsraum zugeführt werden. Da die Wirkung des Ultraschalls in flüssiger Phase besser als in der Gasphase ist, werden die flüssigen Reaktionspartner entweder als solche oder in Form von Lösungen eingesetzt. Die gasförmigen Reaktionspartner gelangen in Form von Lösungen -gegebenenfalls unter Druck- in den Reaktionsraum oder werden dem Reaktionsraum als soche unter Druck zugeführt. Im Reaktionsraum liegt also in jedem Fall eine flüssige Phase vor, die ggf. Gasblasen enthält und in der die feste Phase insbesondere unter dem Einfluß des Ultraschalls suspendiert wird. Durch die Wirkung des Ultraschalls und die Zufuhr der flüssigen und gasförmigen Reaktionspartner in der Nähe der Ultraschallquelle wird erreicht, daß sich die feste Phase in der flüssigen Phase gut verteilt und sich ständig im Wirbelzustand befindet. Außerdem bilden sich auf und in der Nähe der Ultraschallquelle keine Ablagerungen von Feststoffen, so daß der Ultraschall ungehindert in den Reaktionsraum eintreten kann. Durch die erfindungsgemäße Form des Reaktionsraumes werden insbesondere nachteilige Überlagerungen und Auslöschungen der Schallwellen vermieden, woraus eine optimale und gleichmäßige Energieübertragung auf die Reaktionspartner resultiert.

Nach der Erfindung ist ferner vorgesehen, daß der Reaktionsraum einen Kegelwinkel $\gamma$ von 7 bis 35°, ein Volumen von 0,5 bis 100 l und ein Verhältnis von maximalem Durchmesser zur Höhe von 0,1 bis 1,7 hat. Diese Merkmale bewirken in vorteilhafter Weise die Ausbildung ebener Schallwellen, eine gute Intensitätsverteilung im Reaktionsraum und die Verwendbarkeit der Vorrichtung sowohl im halbtechnischen als auch im technischen Maßstab. Auch bei einem Volumen von 100 l kommt es im Reaktionsraum nicht zu makroskopisch lokalen Überhitzungen oder örtlichen Konzentrationsschwankungen der Reaktionspartner, so daß sicherheitstechnische Probleme nicht auftreten. Nach der Erfindung hat sich ein Reaktionsraum mit einem Volumen von 0,5 bis 10 l besonders bewährt, da er auch über einen längeren Zeitraum mit großer Sicherheit betrieben werden kann.

In weiterer Ausgestaltung der Erfindung ist vorgesehen, daß der Reaktionsraum und/oder der Behälter einen Kühlmantel aufweisen. Über den Kühlmantel wird bei exothermen Reaktionen Wärme abgeführt und bei endothermen Reaktionen Wärme zugeführt, so daß die optimale Reaktionstemperatur sicher eingehalten werden kann.

Die bei der erfindungsgemäßen Vorrichtung verwendete Ultraschallquelle besteht aus einem Schallwandler und einem Schallverstärker, wobei als Schallwandler ein piezoelektrischer Wandler und als Schallverstärker eine Sonotrode oder ein Horn verwendet wird. Durch den Einsatz der Sonotrode oder des Horns wird erreicht, daß die Ultraschallquelle den Ultraschall nahezu gleichförmig über den Schalleintrittsdurchmesser abgibt.

In weiterer Ausgestaltung der Erfindung ist vorgesehen, daß die Ultraschallquelle Schallwellen mit einer Frequenz von 20 kHz bis 10 MHz nahezu gleichförmig in den Reaktionsraum abstrahlt und eine Ultraschallintensität von 0,1 bis 1000 W/cm$^2$ erzeugt. Der maximale Wert der Ultraschallintensität von 0,1 bis 1000 W/cm$^2$ wird an der schallabstrahlenden Oberfläche der Sonotrode bzw. des Horns erreicht. Mit diesen Merkmalen wird die Reaktionsgeschwindigkeit erheblich erhöht, ohne daß der Reaktor außer Kontrolle gerät; insbesondere kommt es nicht zu einer unkontrollierten Wärmeentwicklung im Reaktionsraum.

Nach der Erfindung hat es sich als besonders vorteilhaft erwiesen, wenn die in flüssiger Phase vorliegenden Reaktionsprodukte aus dem oberen Teil des Reaktionsraums in den Behälter überführt werden und die festen Reaktionspartner in den oberen Teil des Reaktionsraums zugeführt werden. Der Behälter ist so dimensioniert, daß er eine hinreichend lange Nachreaktionszeit ermöglicht und als Puffer wirkt. Der Behälter ist vorteilhaft als Rührbehälter ausgebildet. Das Zusammenwirken von Reaktionsraum und Behälter ermöglicht insbesondere die kontinuierliche Durchführung der chemischen Reaktionen durch eine Kreislaufführung der flüssigen Phase.

Es ist ferner möglich, den Werkstoff der Innenwand des Reaktionsraums so auszuwählen, daß das Schallfeld für die vorgesehene Reaktion vorteilhaft beeinflußt wird; schallharte Werkstoffe begünstigen die Ausbildung ebener Wellen, und schallweiche Werkstoffe begünstigen die Ausbildung von Kugelwellen.

Um gröbere Teilchen der festen Reaktionspartner nicht in den Behälter zu überführen, ist es nach der Erfindung zweckmäßig, wenn zwischen Reaktionsraum und Behälter ein Filterelement angeordnet ist. Durch dieses Merkmal wird sichergestellt, daß der überwiegende Teil der Reaktionsarbeit im Reaktionsraum erfolgt und das im Behälter lediglich die Nachreaktion abläuft.

Nach der Erfindung ist schließlich vorgesehen, daß durch die in der Nähe der Ultraschallquelle angeordneten Düsen außer den flüssigen und gasförmigen Reaktionspartnern ein inertes Gas in den Reaktionsraum eingebracht wird. Hierdurch wird erreicht, daß die Kavitationswirkungen des Ultraschalls unterstützt und der Wirbelzustand der festen Reaktionspartner verbessert werden.

Nach der Erfindung ist es besonders vorteilhaft, wenn die Vorrichtung zur Durchführung metallorganischer Reaktionen, insbesondere der Grignard-Reaktion verwendet wird. Die Grignard-Reaktion

$$R\text{-}X + Mg \rightarrow R\text{-}Mg\text{-}X$$

R=Alkyl-oder Arylrest; X=Cl, Br, J
wird in der Regel in einem Ether als Lösungsmittel durchgeführt. Im technischen Maßstab ergeben sich bei der Durchführung der Grignard-Reaktion daraus Probleme, daß die Reaktionsgeschwindigkeit vergleichsweise gering ist und die Reaktion häufig nicht in der gewünschten Weise anspringt. Durch die Einwirkung von Ultraschall kann die Reaktionsgeschwindigkeit erhöht und die Induktionszeit verkürzt werden, was sich insbesondere vorteilhaft bei der Durchführung der Grignard-Reaktion im technischen Maßstab auswirkt. Es hat sich gezeigt, daß die Grignard-Reaktion im technischen Maßstab dann besonders gut beherrschbar ist, wenn sie in der erfindungsgemäßen Vorrichtung durchgeführt wird. Es kommt hinzu, daß durch die Erhöhung der Reaktionsgeschwindigkeit und die Verkürzung der Induktionszeit auch im technischen Maßstab in der erfindungsgemäßen Vorrichtung ein kontinuierlicher Betrieb möglich wird, der außerordentlich wirtschaftlich ist. Die erfindungsgemäße Vorrichtung kann auch vorteilhaft zur Erzeugung von Alkyl- und Arylverbindungen des Lithiums verwendet werden.

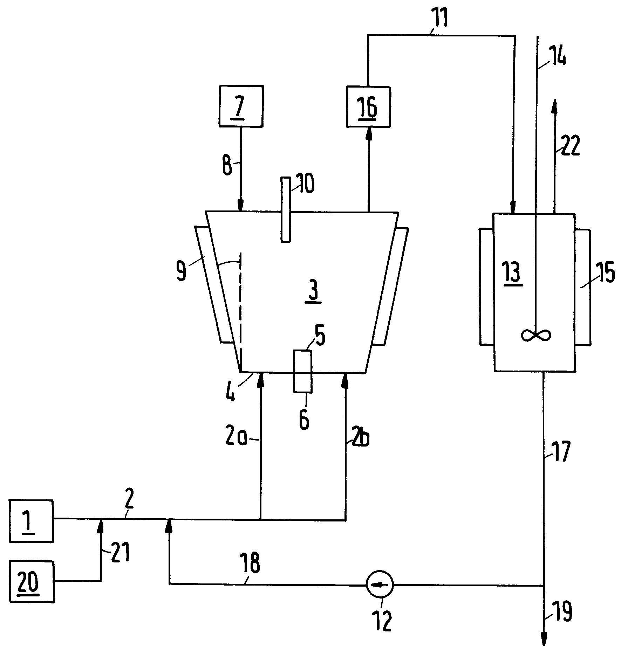

Der Gegenstand der Erfindung wird nachfolgend an Hand der Zeichnung, eines Rechenprogramms und eines Ausführungsbeispiels näher erläutert. Die Zeichnung zeigt eine schematische Darstellung der erfindungsgemäßen Vorrichtung.

Aus dem Vorratstank 1 werden die flüssigen oder gasförmigen Reaktionspartner, die gegebenenfalls in einem Lösungsmittel gelöst sind, in Form einer flüssigen Phase über die Leitung 2 sowie über mehrere Düsen 2a, 2b in den Reaktionsraum 3 gefördert. Aus dem Vorratstank 20 wird zusätzlich ein inertes Gas über die Leitung 21 in die Leitung 2 zudosiert. Die Düsen 2a, 2b sind im Boden 4 des Reaktionsraumes 3 angeordnet und befinden sich in der Nähe der Ultraschallquelle. Der Boden 4 wird von der kleinen Grundfläche des Reaktionsraumes 3 gebildet, der die Form eines Kegelstumpfes hat. Die im Boden 4 angeordnete Ultraschallquelle besteht aus dem Schallwandler 6 sowie der Sonotrode 5 und gibt nahezu gleichförmige Ultraschallwellen in den Reaktionsraum 3 ab. Aus dem Vorratsbehälter 7 werden die zerkleinerten festen Reaktionspartner über die Leitung 8 in den oberen Teil des Reaktionsraumes 3 eingebracht. Die Reaktionstemperatur wird im Reaktionsraum 3 über den Kühlmantel 9 sowie die Temperaturmeßvorrichtung 10 geregelt.

Sowohl die festen als auch die in flüssiger und/oder gasförmiger Phase vorliegenden Reaktionspartner und das inerte Gas werden kontinuierlich in den Reaktionsraum 3 eingetragen. Durch den Gas- bzw. Flüssigkeitsstrahl, der von den Düsen 2a , 2b erzeugt wird, und durch den von der Ultraschallquelle abgegebenen Ultraschall wird im Reaktionsraum 3 eine optimale Vermischung der Reaktionspartner erreicht, wobei sich die festen Reaktionspartner im Wirbelzustand befinden und sich nicht am Boden 4 bzw. auf der Ultraschallquelle 5,6 ablagern. Die flüssige Phase, welche auch die Reaktionsprodukte enthält, wird aus dem oberen Teil des Reaktionsraumes 3 über die Leitung 11 kontinuierlich in den Rührbehälter 13 abgeführt, in dem ein Rührer 14 angeordnet ist. Der Rührbehälter 13 ist mit einem Kühlmantel 15 ausgerüstet, über den auch im Rührbehälter 13 die Reaktionstemperatur aufrecht erhalten wird. Das im Rührbehälter 13 freigesetzte Gas (inertes Gas und nicht umgesetzte gasförmige Reaktionspartner) wird über die Leitung 22 abgeführt und, ggf. nach einer Aufarbeitung, in den Reaktionsraum 3 zurückgeleitet, was in der Zeichnung nicht dargestellt ist. In der Leitung 11 ist ein Filterelement 16 angeordnet, das Feststoffteilchen aus der in den Rührbehälter 13 geförderten flüssigen Phase zurückhält.

Über die Leitung 17 wird aus dem Rührbehälter 13 kontinuierlich ein Teil der flüssigen Phase entnommen. Hiervon wird ein Teilstrom über die Pumpe 12 sowie die Leitungen 18 und 2 in den Reaktionsraum 3 zurückgeführt, um die in der flüssigen Phase noch vorhandenen Reaktionspartner umzusetzen. Ein zweiter Teilstrom gelangt über die Leitung 19 zur Produktgewinnung. Die Höhe, der Kegelwinkel γ, der maximale Durchmesser, das Verhältnis von maximalem Durchmesser zur Höhe und das Volumen des Reaktionsraumes 3 sowie der Durchmesser, die Frequenz und die Ultraschallintensität der Ultraschallquelle 5,6 sind insbesondere abhängig von der Reaktionsgeschwindigkeit der chemischen Reaktion, dem Absorptionsverhalten des mehrphasigen Inhalts des Reaktionsraumes gegenüber den Schallwellen, der Bauform der Sonotrode 5 und den Leistungsdaten des Schallwandlers 6. Die Auswahl der Ultraschallquelle und die Auslegung des Reaktionsraums 3 wird für den jeweiligen Anwendungsfall der erfindungsgemäßen Vorrichtung unter Benutzung eines Rechenprogramms durchgeführt, das auf der Websterschen Differentialgleichung beruht, die allgemein zur Berechnung von Schalltrichtern verwendet wird. Die Dimensionierung des Rührbehälters 13 wird so vorgenommen, daß er eine ausreichende Nachreaktionszeit gewährleistet und ein ausreichendes Puffervermögen hat. Zur Vermeidung von Nebenreaktionen ist allerdings darauf zu achten, daß das Volumen des Rührbehälters 13 nicht zu groß gewählt wird.

Nachfolgend wird das zur Auslegung des Reaktionsraumes 3 verwendete Rechenprogramm erläutert. Die Webstersche Differentialgleichung lautet:

$$\frac{\delta 2p}{\delta x^2}+\frac{d\ln A}{dx}\frac{\delta 2p}{\delta x}=\frac{1}{c^2}\frac{\delta^2 p}{\delta t^2} \tag{1}$$

Für den Fall eines Konustrichters lautet der Ansatz für die variable Querschnittsfläche des Trichters:

$$A(x)=ax^2 \tag{2}$$

und die o.g. Differentialgleichung geht über in:

$$\frac{\delta^2(px)}{\delta x^2}+k^2(px)=0 \tag{3}$$

mit der Wellenzahl:

$$k=\frac{\omega}{c}$$

$c=$ Schallgeschwindigkeit im Reaktionsgemisch;

$\omega=$ Kreisfrequenz der Schwingungen

Die Lösungen dieser Differentialgleichung für den Druck und die Schallgeschwindigkeit lauten:

$$\underline{p}(x)=\frac{\underline{p}_T x_T}{x} \cdot \exp(i\omega t) \cdot \exp(-ikx) \tag{4}$$

und

$$\underline{V}(x)=\frac{1}{\rho c} \cdot \frac{\underline{p}_T x_T}{x} \cdot \exp(i\omega t) \cdot \exp(-ikx) \cdot (1-\frac{1}{ikx}) \tag{5}$$

Die Strahlungsimpedanz ist somit für den Konustrichter bei der Koordinate des Kolbenstrahlers gleich:

$$\frac{\underline{Z}_{R_1 T}}{A_T}=\frac{\underline{p}_T(x_T)}{\underline{v}_T(x_T)}=\rho c\frac{ikx_T}{1+ikx_T} \tag{6}$$

Für die Abstrahlung der Energie als Kompressionswelle muß der imaginäre Anteil verschwinden, d.h. der Realteil der Strahlungsimpedanz $Z_R$, der Strahlungswiderstand $R_R$, muß groß werden. Der maximal mögliche Wert ist gleich $\rho \cdot c$ und das Verhältnis:

$$\frac{R_{R_1 T}}{A_T} \cdot \frac{1}{\rho c}=\frac{(kx_T)^2}{1+(kx_T)^2}\leqq 1 \tag{7}$$

soll gegen Eins gehen. Bei gegebener Wellenzahl k für das Medium ist also die Koordinate $x_T$ des Kolbenstrahlers im Trichter so zu berechnen, daß ein vorgegebener Wert erreicht wird. Für den Kolbenstrahler im freien Medium bei gleicher Amplitude ist in Gleichung 7 der halbe Kolbendurchmesser statt der Koordinate $x_T$ anzusetzen, wodurch die übertragene Schallenergie besonders bei sehr kleinen Werten von $k \cdot d_T/2$ immer geringer wird. Zusammen mit dem Durchmesser des Kolbenstrahlers $d_T$ kann dann der Öffnungswinkel des Trichters zu

$$\gamma=\arctan\left(\frac{(d_T/2)}{x_T}\right) \qquad (8)$$

bestimmt werden. Die Koordinate $x_L$ des Reaktorausgangs soll so gewählt werden, daß dessen maximaler Durchmesser $d_L$ größer als die Wellenlänge $\lambda$ im Medium ist. Damit wird eine Reflexion der Welle verhindert und eine ungehinderte Ausbreitung in den weiteren Reaktionsraum wird ermöglicht:

$$x_L=\frac{d_L/2}{\tan(\gamma)} \qquad (9)$$

Eine Reflexion und damit die Ausbildung eines Stehwellenfeldes kann durch die Einstellung der Füllhöhe des Reaktionsraumes gesteuert werden. Durch die Verwendung der Trichtergeometrie kann die abgestrahlte akustische Leistung gegenüber der des im freien Medium schwingenden Kolbenstrahlers vergrößert werden. Der Strahlungswiderstand des verwendeten Kolbenstrahlers im freien Medium ist gleich:

$$\frac{R_{R_1T}}{A_T} \cdot \frac{1}{\rho c}=\frac{\left(k\frac{d_T}{2}\right)^2}{1+\left(k\frac{d_T}{2}\right)^2}=0,59 \qquad (10)$$

Als technisch realisierbare Maße eines Produktionsreaktors sind folgende Annahmen zu treffen:

1. Maximaler Durchmesser der Sonotrode: $d_T=30mm$

2. Wellenzahlen der Betriebsmedien $k=\bar{\omega}/c$
Der kleinste Wert liegt bei einer Frequenz von 20 kHz und Wasser mit $c=1500$ m/s vor. Organische Lösungsmittel liegen in der Regel bei $c \leq 1000$ m/s, so daß Wellenzahlen zwischen 0,1257 1/mm $\geq k \geq$ 0,0838 l/mm auftreten können.

3. Wirkungsgrade (nach Gleichung 10):
Sie liegen zwischen 90 und 99%, so daß das Produkt $k \cdot x_T$ zwischen $10 \geq k \cdot x_T \geq 3$ beträgt.

4. Maximaler Durchmesser $d_L$: Er ist größer als die Wellenlänge im Medium. Diese Bedingung ist in jedem Fall erfüllt, wenn der maximale Durchmesser größer als die Wellenlänge in Wasser bei 20 kHz ist, da in organischen Flüssigkeiten kleinere Wellenlängen vorleigen $d_L \geq 75$ mm.

Mit diesen allgemeinen Vorgaben lassen sich die geometrischen Grenzfälle für die verschiedenen Wellenzahlen bestimmen. Bei der Auslegung des Reaktionsraumes 3 sind aber auch verfahrenstechnische Überlegungen zu berücksichtigen.

**Beispiel:**

Nachfolgend wird die erfindungsgemäße Vorrichtung und ihre Verwendung zur Durchführung einer Grignard-Reaktion näher erläutert. Unter Benutzung des Rechenprogramms wird zur Durchführung einer Grignard-Reaktion, die in Tetrahydrofuran abläuft, als flüssigen Reaktionspartner 2-Chlorbutan und als festen Reaktionspartner Magnesium mit einer Teilchengröße von 1,8 bis 1,4 mm verwendet, ein Reaktionsraum geschaffen, der einen Kegelwinkel $\gamma$ von 7°, eine Höhe von 200 mm, ein Volumen von 0,5 l, einen maximalen Durchmesser von 80 mm ein Verhältnis von maximalem Durchmesser zur Höhe von 0,4 und einen Bodendurchmesser von 30 mm hat. Die Ultraschallquelle enthält einen Schallwandler, der einen Ultraschall mit einer Frequenz von 20 kHz und einer Intensität von 20 W/cm$^2$ abstrahlt. Die Sonotrode der Ultraschallquelle hat einen Durchmesser von 13 mm. Die Grignard-Reaktion wird bei einer Temperatur von 23°C und einem Überdruck von 0,1 MPa durchgeführt. In den Reaktionsraum werden kontinuierlich pro Minute 2,2 ml einer 1-molaren 2-Chlorbutan-Lösung in Tetrahydrofuran zugeführt. Dem Reaktionsraum ist ein Rührbehälter mit einem Volumen von 3 l nachgeschaltet. Im Reaktionsraum befinden sich 10 g Magnesium.

Es wurde festgestellt, daß die Grignard-Reaktion unter der Einwirkung des Ultraschalls um 300% schneller abläuft. Hieraus folgt, daß beim Einsatz in einer kontinuierlichen Anlage in einem Drittel der sonst notwendigen Zeit der gleiche Umsatz erreicht werden kann. Ferner wurde gefunden, daß die Grignard-Reaktion unter der Einwirkung des Ultraschalls bei 5°C mit der gleichen Reaktionsgeschwindigkeit abläuft, wie die Grignard-Reaktion ohne Einwirkung von Ultraschall bei einer Reaktionstemperatur von 23°C. Daraus folgt, daß die Nebenreaktionen unter der Einwirkung von Ultraschall durch die mögliche Erniedrigung der Reaktionstemperatur zurückgedrängt werden können.

**Patentansprüche**

1. Vorrichtung zur Durchführung chemischer Reaktionen zwischen flüssigen oder gasförmigen und festen Reaktionspartnern unter Einwirkung von Ultraschall, dadurch gekennzeichnet, daß die Vorrichtung aus einem trichterförmigen Reaktionsraum (3) und einem nachgeschalteten Behälter (13) besteht, wobei der Reaktionsraum (3) die Form eines Kegelstumpfes hat, an dessen kleiner Grundfläche (4) die Ultraschallquelle (5,6) angeordnet ist, und wobei in der Nähe der Ultraschallquelle (5,6) mindestens eine Düse (2a, 2b) angeordnet ist, über die die flüssigen und gasförmigen Reaktionspartner dem Reaktionsraum (3) zugeführt werden.

2. Vorrichtung nach Anspruch 1, dadurch gekennzeichnet, daß der Reaktionsraum (3) einen Kegelwinkel γ von 7 bis 35°, ein Volumen von 0,5 bis 100 l und ein Verhältnis von maximalem Durchmesser zur Höhe von 0,1 bis 1,7 hat.

3. Vorrichtung nach Anspruch 2, dadurch gekennzeichnet, daß der Reaktionsraum (3) ein Volumen von 0,5 bis 10 l hat.

4. Vorrichtung nach den Ansprüchen 1 bis 3, dadurch gekennzeichnet, daß der Reaktionsraum (3) und/oder der Behälter (13) einen Kühlmantel (9,15) aufweisen.

5. Vorrichtung nach den Ansprüchen 1 bis 4, dadurch gekennzeichnet, daß die Ultraschallquelle aus einem Schallwandler (6) und einem Schallverstärker (5) besteht, wobei als Schallwandler ein piezoelektrischer Wandler und als Schallverstärker eine Sonotrode oder ein Horn verwendet wird.

6. Vorrichtung nach den Ansprüchen 1 bis 5, dadurch gekennzeichnet, daß die Ultraschallquelle (5,6) Schallwellen mit einer Frequenz von 20 kHz bis 10 MHz nahezu gleichförmig in den Reaktionsraum (3) abstrahlt und eine Ultraschallintensität von 0,1 bis 1000 W/cm$^2$ erzeugt.

7. Vorrichtung nach den Ansprüchen 1 bis 6, dadurch gekennzeichnet, daß die in flüssiger Phase vorliegenden Reaktionsprodukte aus dem oberen Teil des Reaktionsraums (3) in den Behälter (13) überführt werden und daß die festen Reaktionspartner in den oberen Teil des Reaktionsraums (3) zugeführt werden.

8. Vorrichtung nach den Ansprüchen 1 bis 7, dadurch gekennzeichnet, daß zwischen Reaktionsraum (3) und Behälter (13) ein Filterelement (16) angeordnet ist.

9. Vorrichtung nach den Ansprüchen 1 bis 8, dadurch gekennzeichnet, daß durch die in der Nähe der Ultraschallquellen (5,6) angeordnete Düse (2a, 2b) außer den flüssigen und gasförmigen Reaktionspartnern ein inertes Gas in den Reaktionsraum (3) eingebracht wird.

10. Verwendung der Vorrichtung nach den Ansprüchen 1 bis 7, zur Durchführung metallorganischer Reaktionen, insbesondere der Grignard-Reaktion.

| | Europäisches Patentamt | EUROPÄISCHER RECHERCHENBERICHT | Nummer der Anmeldung EP 96 10 7549 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | US-A-2 800 444 (THE STANDARD OIL COMPANY) * das ganze Dokument * --- | 1,2,4-7 | B01J19/10 B01J19/26 B01J19/24 B01J8/22 |
| A | DE-A-39 02 665 (H. GARBE) * das ganze Dokument * --- | 1,2,5-7, 9 | |
| A | FR-A-2 338 073 (BERTIN & CIE.) * das ganze Dokument * --- | 1,2,5,7, 9 | |
| A | EP-A-0 584 685 (HOECHST AKTIENGESELLSCHAFT) * das ganze Dokument * --- | 1,2,4,5 | |
| A | DE-A-14 42 761 (LICENCIA TALÁMÁNYOKAT ARTAKESITÖ VÁLLALAT) * Seite 7, letzter Absatz - Seite 9, Absatz 1 * * Beispiele 3,4,6 * * Ansprüche; Abbildung * --- | 1,6,7,9 | |
| A | GB-A-447 159 (I.SETO & M. SATO) * das ganze Dokument * --- | 1,4,7 | RECHERCHIERTE SACHGEBIETE (Int.Cl.6) B01J B01F C07B C07C |
| A | US-A-2 662 091 (W.W.ODELL) * Spalte 5, Zeile 44 - Spalte 6, Zeile 57 * * Abbildung 1 * --- | 1,2,7,8 | |
| A | EP-A-0 374 761 (HOECHST AKTIENGESELLSCHAFT) * Seite 4, Zeile 16 - Zeile 25 * * Beispiele 1,2 * --- -/-- | 1,6,10 | |

Der vorliegende Recherchenbericht wurde für alle Patentansprüche erstellt

| Recherchenort | Abschlußdatum der Recherche | Prüfer |
|---|---|---|
| DEN HAAG | 16.Oktober 1996 | Stevnsborg, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
...............................................................
& : Mitglied der gleichen Patentfamilie, übereinstimmendes Dokument

EPO FORM 1503 03.82 (P04C03)

Europäisches
Patentamt

Nummer der Anmeldung

EP 96 10 7549

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | EP-A-0 173 219 (RUHRCHEMIE AKTIENGESELLSCHAFT)<br>* Zusammenfassung *<br>* Seite 4, Absatz 1 - Absatz 4 *<br>* Beispiel 5 *<br>--- | 1,3-6 | |
| A | WO-A-92 00306 (HOECHST AKTIENGESELLSCHAFT)<br>* Seite 4, Absatz 3 *<br>----- | 10 | |

RECHERCHIERTE
SACHGEBIETE (Int.Cl.6)

Der vorliegende Recherchenbericht wurde für alle Patentansprüche erstellt

| Recherchenort | Abschlußdatum der Recherche | Prüfer |
|---|---|---|
| DEN HAAG | 16.Oktober 1996 | Stevnsborg, N |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes
Dokument

EPO FORM 1503 03.82 (P04C03)